# EUROPEAN PATENT APPLICATION

(11) **EP 4 467 410 A1**
(43) Date of publication of application: **27.11.2024**
(21) Application number: 22922019.9
(22) Date of filing: 25.10.2022
(51) Int. Cl.: B60W 40/072, B60W 30/02, B60W 30/10, B60W 60/00

(54) **VEHICLE MOVEMENT CONTROL DEVICE AND VEHICLE MOVEMENT CONTROL METHOD**

(30) Priority: 20.01.2022 JP 2022007138
(71) Applicant: Hitachi Astemo, Ltd., Ibaraki 312-8503 (JP)
(72) Inventor: NASU Shingo, Tokyo 100-8280 (JP); UENO Kentarou, Hitachinaka-shi, Ibaraki 312-8503 (JP); SETO Shinji, Tokyo 100-8280 (JP)
(74) Representative: MERH-IP Matias Erny Reichl Hoffmann Patentanwälte PartG mbB
(86) International application number: PCT/JP2022/039604
(87) International publication number: WO 2023/139867

(57) **Abstract**

The present invention provides a vehicle movement control device to achieve both ride quality and minimization in travel time by setting a speed to make a physical quantity of an acceleration or jerk fall within a specified value in consideration of cooperation of longitudinal movement and lateral movement generated on a vehicle during travel. The vehicle movement control device includes: path command value calculation means that generates a path on which a vehicle travels; specified value setting means that sets a specified value of a physical quality of a vehicle behavior when traveling on the path; path feature point setting means that sets a path feature point based on the path and the specified value; and speed command value calculation means that calculates a speed for the vehicle to travel on the path based on the path, the specified value, and the path feature point. The speed command value calculation means sets a zero point of a longitudinal acceleration based on a path feature point that is a peak point of a curvature of the path, and sets a peak point of a longitudinal acceleration based on a path feature point that is a peak point of a distance derivative value of the curvature.

## Description

### Technical Field

The present invention relates to a vehicle movement control device and a vehicle movement control method to control movement of a vehicle according to a travel path.

### Background Art

As a type of a vehicle movement control technology represented by driving assistance and autonomous driving system, a technology that generates a travel trajectory including information about, e.g., a travel path and travel speed used as a travel target of a vehicle and controls a powertrain, a brake, a steering, etc. to make the vehicle travel along the travel trajectory is known. As a simplest travel path control, there is, e.g., a lane keeping control that sets the center of a lane as a travel path.

Additionally, as a more advanced travel path control technology, there is one disclosed in Patent Literature 1, for example. The latter stage of claim 1 of Patent Literature 1 describes a travel assistance method "calculates, based on the travel path condition information, a constraint condition that constrains a first friction circle characteristic by a tire grip limit of a longitudinal acceleration and a lateral acceleration to or below a longitudinal acceleration value and a lateral acceleration value by a tire grip limit, generates a target speed profile along the target trajectory by using the constraint condition, and executes travel assistance based on the target speed profile when the host vehicle travels along the target trajectory."

Thus, Patent Literature 1 aims at the travel assistance method that assumes the tire grip limit resulting from, e.g., the travel path curvature of the future travel path, and discloses the travel assistance method that, in the scene where the host vehicle travels along the target trajectory, prevents the host vehicle travel trajectory from deviating from the target trajectory regardless of the travel path condition in front of the host vehicle by generating the target speed profile of the host vehicle based on the constraint condition by the tire grip limit.

### Citation List

### Patent Literature

Patent Literature 1: Japanese Unexamined Patent Application Publication No. 2021-049867

### Summary of Invention

### Technical Problem

However, the travel assistance method of Patent Literature 1 is just a technology of suppressing peak values of a longitudinal acceleration and a lateral acceleration based on a tire grip limit, and is not a technology of improving ride quality and comfort for passengers. Therefore, when peak values of a longitudinal acceleration and a lateral acceleration are suppressed using the technology of Patent Literature 1, the number of accelerations and decelerations increases or a behavior of a vehicle becomes unstable to compensate for a vehicle speed fall. This may decrease ride quality and comfort for passengers.

Thus, the present invention is to provide a vehicle movement control device in which, in consideration of a cooperation of longitudinal movement and lateral movement such as an alignment of, e.g., a peak point of a curvature of a travel path and a zero point of a longitudinal acceleration of a host vehicle, ride quality and comfort for passengers are improved by setting a speed of the host vehicle to make a physical quantity related to a vehicle behavior such as an acceleration and jerk fall within a specified value.

### Solution to Problem

For addressing the above subject, a vehicle movement control device of the present invention includes: a path planning part that generates a path on which a vehicle travels; a specified value setting part that sets a specified value of a physical quantity of a vehicle behavior when traveling on the path; a path feature point setting part that sets a path feature point based on the path and the specified value; and a travel speed generation part that generates a speed command value for the vehicle to travel on the path based on the path, the specified value, and the path feature point. The travel speed generation part sets a zero point of a longitudinal acceleration based on a path feature point that is a peak point of a curvature of the path, and sets a peak point of a longitudinal acceleration based on a path feature point that is a peak point of a distance derivative value of the curvature.

### Advantageous Effects of Invention

According to a vehicle movement control device or a vehicle movement control method of the present invention, in consideration of cooperation of longitudinal movement and lateral movement such as alignment of a peak point of a curvature of a travel path and a zero point of a longitudinal acceleration of a host vehicle, by setting a speed of the host vehicle to make a physical quantity related to vehicle behavior such as acceleration and jerk fall within a specified value, ride quality and comfort for passengers are improved. Note that that subjects, configurations, and effects other than the above description are made obvious from explanations of below-described embodiments.

### Brief Description of Drawings

Fig. 1 illustrates a functional block diagram of a vehicle-mounted system of First Embodiment.
Fig. 2 illustrates a functional block diagram of a travel trajectory generation unit of First Embodiment.
Fig. 3 illustrates a functional block diagram of a speed planning part of First Embodiment.
Fig. 4 illustrates a plane view of a travel path.
Fig. 5A illustrates a curvature of a path command value whose curvature variation is linear, a distance derivative of a curvature, and a path feature point.
Fig. 5B illustrates a curvature of a path command value whose curvature variation is non-linear, a distance derivative of a curvature, and a path feature point.
Fig. 6 illustrates a flowchart indicating a process outline of a speed planning part of First Embodiment.
Fig. 7A illustrates one example of a physical quantity graph when using a speed command value of Step S31 during travel.
Fig. 7B illustrates one example of a physical quantity graph when using a speed command value of Step S33 during travel.
Fig. 7C illustrates one example of a physical quantity graph when using a speed command value of Step S35 during travel.
Fig. 8A is one example of a physical quantity graph when a speed specified value is switched during travel.
Fig. 8B is another example of a physical quantity graph when a speed specified value is switched during travel.
Fig. 9 illustrates a flowchart indicating a process outline of a speed planning part of Second Embodiment.
Fig. 10A illustrates one example of a physical quantity graph when using a speed command value of Step S5 during travel.
Fig. 10B illustrates one example of a physical quantity graph when using a speed command value of Step S6 during travel.
Fig. 11 illustrates a flowchart indicating a process outline of a speed planning part of Third Embodiment.
Fig. 12 illustrates one example of a physical quantity graph when using a speed command value of Step S8 during travel.
Fig. 13 illustrates a flowchart indicating a process outline of a speed planning part of Fourth Embodiment.
Fig. 14 illustrates a functional block diagram of a speed planning part of Fifth Embodiment.

### Description of Embodiments

Hereinafter, embodiments of a vehicle movement control device of the present invention are explained using the drawings. Note that generally identical or similar configurations are provided with identical reference signs, and repeating of the same explanations may be omitted. Additionally, explanations for well-known technologies may be omitted.

### First Embodiment

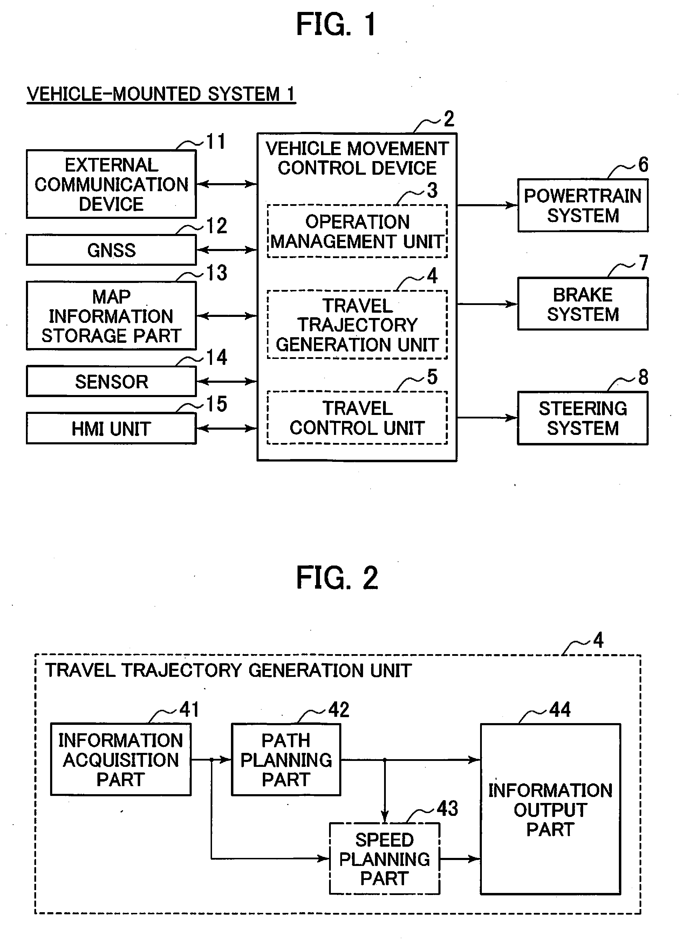

First, by use of Figs. 1 to 8, a vehicle movement control device 2 of First Embodiment of the present invention is explained.

### <Vehicle-mounted System 1>

Fig. 1 is a functional block diagram of a vehicle-mounted system 1 having the vehicle movement control device 2 of the present embodiment. The vehicle mounted system 1 is mounted to a host vehicle to execute vehicle movement control such as driving assistance and autonomous driving, and as illustrated, includes an external communication device 11, a GNSS (Global Navigation Satellite System) 12, a map information storage part 13, a sensor 14, a HMI (human machine interface) unit 15, the vehicle movement control device 2, a powertrain system 6, a brake system 7, and a steering system 8. The explanations are sequentially made hereinafter.

### <Information Source Group of Vehicle Movement Control Device 2>

Through wireless communications, the external communication device 11 performs inter-vehicle communications between a host vehicle and other vehicles or vehicle-roadside communications between a host vehicle and roadside devices to transmit and receive information about vehicles, ambient environment, etc.

The GNSS 12 receives electric waves sent from artificial satellites such as a Quasi-Zenith Satellite and a GPS (Global Positioning System) satellite, and acquires information on a position of a host vehicle etc.

The map information storage part 13 stores general road information used in a navigation system etc., road information having information about a width of a road or a curve such as a curvature of a road, information about a road surface condition or traffic condition, information about, e.g., vehicles or ambient environment that are information about travel conditions of other vehicles. Note that the information about, e.g., vehicles or ambient environment is sequentially updated via the external communication device 11 by using information acquired via the inter-vehicle communications and vehicle-roadside communications.

The sensor 14 is an image sensor, a millimeter wave radar, an external recognition sensor that detects information about, e.g., vehicles and ambient environment such as a rider, or a sensor that detects information about, e.g., operations by a driver, a speed, an acceleration, a jerk, and an angular velocity of a vehicle and a steering angle of a wheel. The information about, e.g., vehicles or ambient environment detected by the external recognition sensor includes, e.g., information about various objects such as obstacles around a host vehicle, signs, boundary lines between lanes, outer lines of lanes, buildings, pedestrians, and other vehicles. In addition, the sensor 14 recognizes, e.g., lane boundaries and outer lane lines based on a difference between brightnesses of a white line and a road surface in image data taken by the image sensor.

The HMI unit 15 displays information required by a user on a display and announces the information with voice using a speaker from information received by an input operation of a user such as selection of a travel mode or setting of a destination, information acquired from the external communication device 11, the GNSS 12, and the sensor 14, and information recorded on the map information storage part 13. In addition, the HMI unit 15 provides an alert to a user.

Herein, the travel mode includes, e.g., a comfort mode, an economy mode, and a sport mode. The travel mode is optionally or previously set by a user or set by an after-mentioned operation management unit 3 based on travel condition information to set a speed, acceleration, jerk, etc. of a vehicle. Thus, the specified value setting part 31 of the operation management unit 3 changes a specified value of a behavior of a vehicle in response to the set travel mode. Note that the travel mode includes a shortest time mode that minimizes a transition time and a shortest distance mode that minimizes a transition distance.

### <Vehicle Movement Control Device 2>

As illustrated in Fig. 1, the vehicle movement control device 2 has an operation management unit 3, a travel trajectory generation unit 4, and a travel control unit 5. This vehicle movement control device 2 specifically has a calculation device such as a CPU (Central Processing Unit), a main storage and an auxiliary storage such as a semiconductor memory, and hardware such as a communication device, and is an ECU (Electronic Control Unit) that totally controls a vehicle to achieve various functions such as the operation management unit 3 by executing programs loaded to the main storage in the calculation device. Note that, in the present embodiment, for convenience of explanation, the operation management unit 3, the travel trajectory generation unit 4, and the travel control unit 5 each have an isolated configuration, but do not necessarily need have an isolated configuration. When these units are used in an actual vehicle, a higher controller may achieve various functions of these units.

Based on information acquired by the external communication device 11, the GNSS 12, and the sensor 14 and map information recorded on the map information storage part 13, the operation management unit 3 generates information about a position of a host vehicle, information about various objects around the host vehicle (information about vehicles and ambient environment), and information about a behavior of a vehicle such as a lateral acceleration, a yaw rate, and a lateral jerk. In addition, the operation management unit 3 transmits the information about the position of the host vehicle, the information about various objects, and the information about the behavior of the vehicle to the other vehicles and roadside devices periodically and to the map information storage part 13 via the external communication device 11 to sequentially update the map information recorded on the map information storage part 13. Further, based on the information about the position of the host vehicle, the information about various objects, and the information about behavior of the vehicle and on the information received by the HMI unit 15 (for example, a travel mode and destination), the operation management unit 3 sets information about a path from a current position of a vehicle to a destination. The information about the path set herein includes a specified value of the behavior of the vehicle, the specified value being set by the specified value setting part 31 of the operation management unit 3 in response to the travel mode. Note that the information generated and set by the operation management unit 3 may be called "travel condition information."

As illustrated in Fig. 2, a travel trajectory generation unit 4 has an information acquisition part 41, a path planning part 42, a speed planning part 43, and an information output part 44. Based on the travel condition information transmitted from the operation management unit 3 and acquired by the information acquisition part 41, the travel trajectory generation unit 4 generates a path (hereinafter called a "path command value P") as a travel target when a vehicle travels on a road in the path planning part 42. Herein, the path command value P is a command value generated based on either information near the host vehicle acquired by, e.g., the sensor 14 or information in which the distant map information recorded on the map information storage part 13 is combined with the information near the host vehicle. The generation method for the path command value P is not limiting. Then, the speed planning part 43 generates a speed (hereinafter called "speed command value") that is a travel target when a vehicle travels on a road based on the path command value P and travel path information. The information output part,44 outputs a travel trajectory configured using information such as the path command value P and the speed command value to the travel control unit 5. Note that details of the speed planning part 43 are described later.

The travel control unit 5 sets a target driving force, a target braking force, a target steering angle, etc., and controls the powertrain system 6, the brake system 7, and the steering system 8 for a vehicle to travel along the travel trajectory outputted from the travel trajectory generation unit 4.

### <Control Target Group of Vehicle Movement Control Device 2>

The powertrain system 6 controls a driving force generated due to, e.g., an internal combustion engine or an electric motor based on operations by a driver and the target driving force outputted from the travel control unit 5.

The brake system 7 controls a braking force generated by, e.g., a brake caliper based on operations by the driver and the target braking force outputted from the travel control unit 5.

The steering system 8 controls a steering angle of a wheel based on operations by the driver and a target steering angle outputted from the travel control unit 5.

### <Speed Planning Part 43>

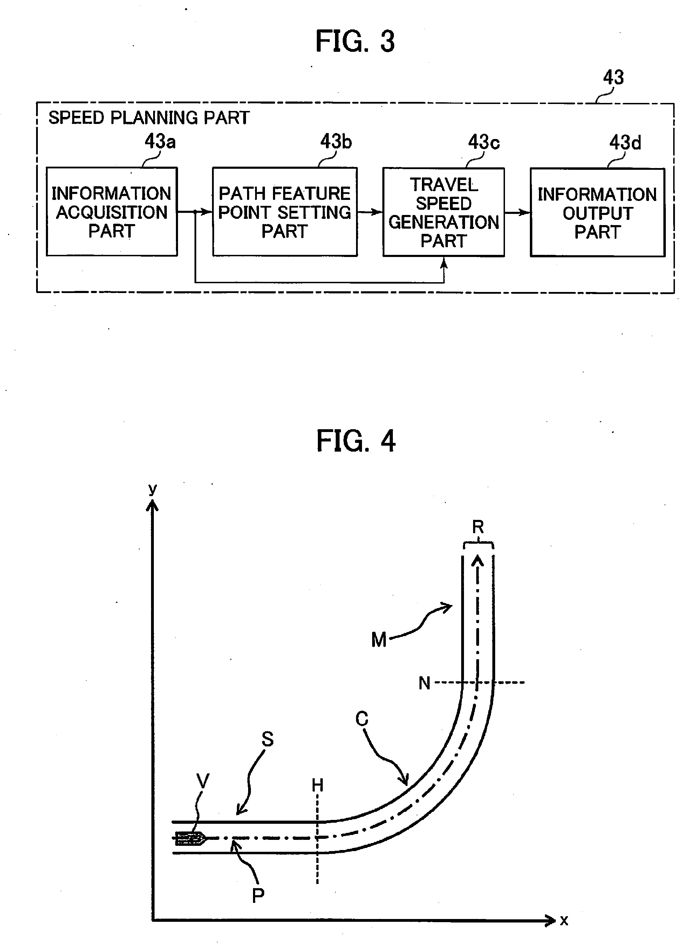

Next, details of the speed planning part 43 are explained using the functional block diagram of Fig. 3. The speed planning part 43 generates a speed command value of a vehicle based on a position and speed of the vehicle, an upper limit value of the behavior, the path command value P, etc., and has an information acquisition part 43a, a path feature point setting part 43b, a travel speed generation part 43c, and an information output part 43d illustrated in Fig. 3. The explanations are sequentially made hereinafter.

The information acquisition part 43a acquires travel condition information from the operation management unit 3, acquires the path command value P from the path planning part 42, and outputs the travel condition information and the path command value P to each part in the speed planning part 43.

The path feature point setting part 43b sets a feature point on the path command value P such as a peak point of a curvature and a peak point of a distance derivative value of a curvature based on the path command value P acquired from the information acquisition part 43a. Herein, the path feature point set by the path featurepoint setting part 43b may be a point of a curvature of zero or a starting point or end point of the path command value P. The definition of the path feature point is not limiting.

The travel speed generation part 43c generates a speed command value when the host vehicle travels with the path command value P based on the travel condition information and path command value P from the information acquisition part 43a and on a path feature point such as a peak point of a curvature from the path feature point setting part 43b.

The information output part 43d outputs a speed command value from the travel speed generation part 43c to the information output part 44.

### <Processing of Path Feature Point Setting Part 43b>

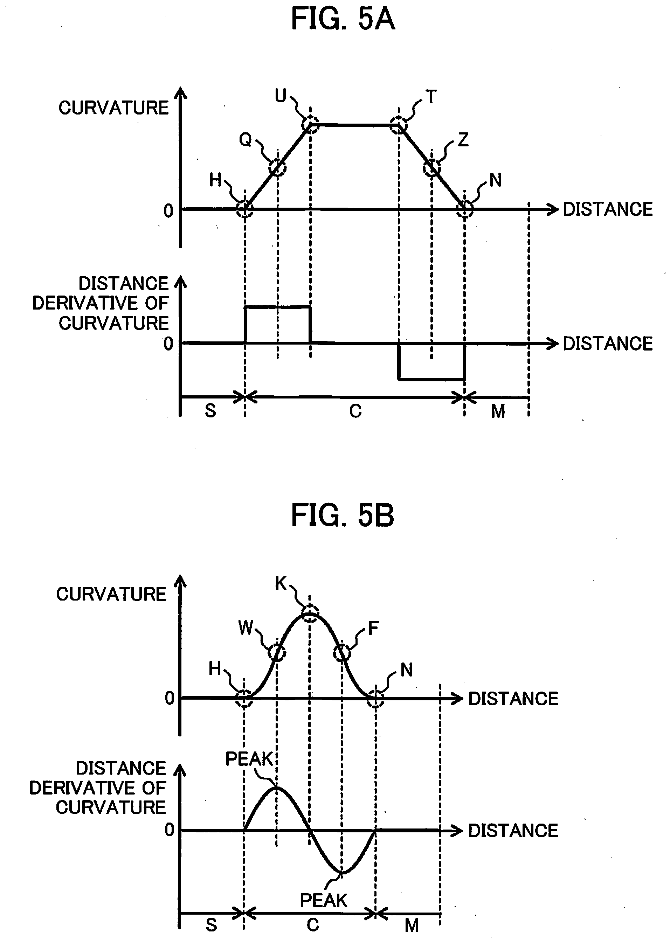

Next, a path feature point generated one after another in the condition of traveling on the travel path of Fig. 4 is explained using Fig. 5A and Fig. 5B.

Fig. 4 is a plane view of a travel path for a host vehicle V to travel, and illustrates the path command value P set within a travelable region R of the host vehicle V in a certain time. This travelable region R includes an inflection point H for a starting point of a left curve and an inflection point N for an end point. A section to the inflection point H is defined as a straight path S. A section from the inflection point H to the inflection point N is defined as a curve C. A section at or after the inflection point N is defined as a straight path M.

Fig. 5A is one example for a curvature of the travel path of Fig. 4 including the curve C having a relaxation curve section and a standard curve section and for a distance derivative value of the curvature. Fig. 5A includes an inflection point U where the curvature changes to a constant value at or after the inflection point H and an inflection point T where the curvature changes from the constant value at or after the inflection point U. The inflection point U and the inflection point T are defined as peak points of the curvature. A section from the inflection point H to the inflection point U and a section from the inflection point T to the inflection point N are relaxation curve sections where the curvature changes to a linear shape. In each section, the distance derivative value of the curvature is constant. Thus, a peak point of the distance derivative value of the curvature is not present. In Fig. 5, a middle point Q between the inflection point H and the inflection point U and a middle point Z between the inflection point T and the inflection point N are defined as peak points of the distance derivative value of the curvature.

Fig. 5B is one example for a curvature of the travel path of Fig. 4 including the curve C having a relaxation curvature section and for a distance derivative value of the curvature. In Fig. 5B, a peak point K of the curvature is present, and a section from the inflection point H to the peak point K of the curvature and a section from the peak point K of the curvature to the inflection point N are relaxation curvature sections where the curvature changes to a non-linear shape. In the relaxation curvature sections, points W and F where the distance derivative value of the curvature is peaked are defined as peak points of the distance derivative value of the curvature, respectively.

### <One Example of Processing of Speed Planning Part 43>

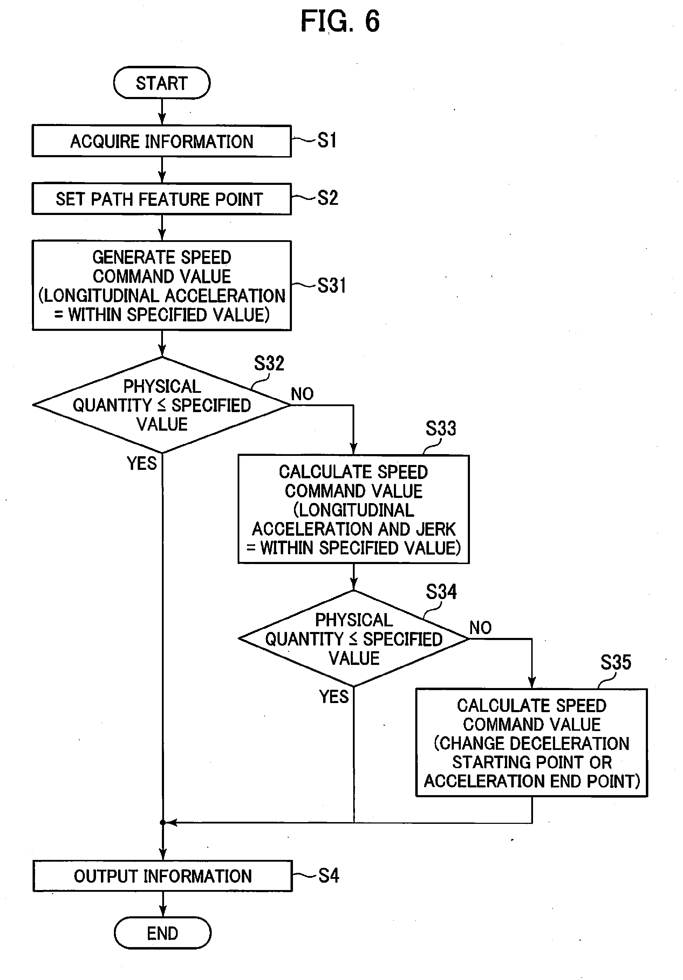

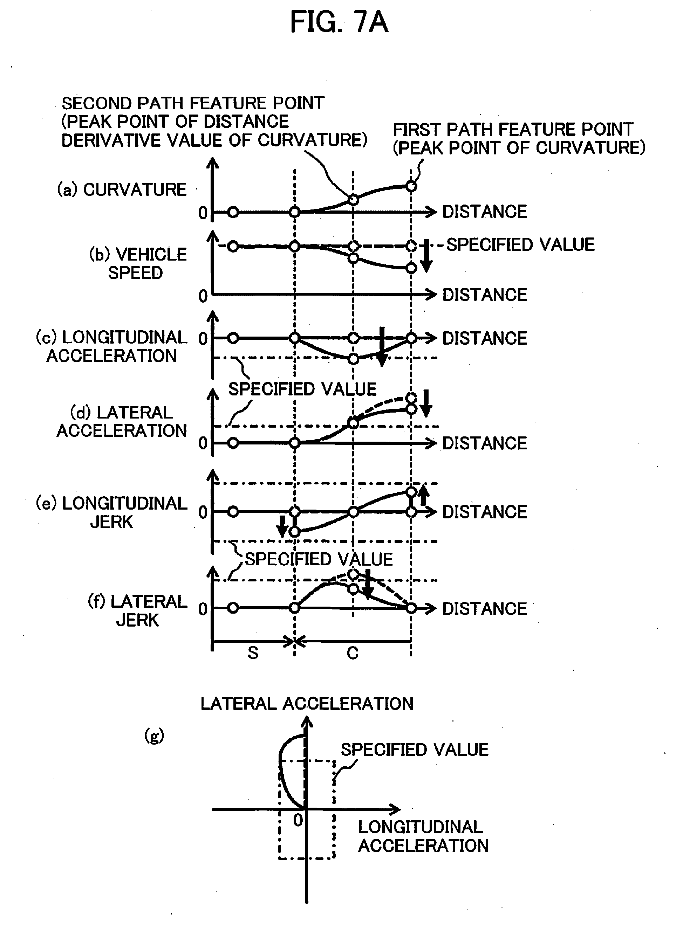

Next, by use of Figs. 6 to 7C, a speed command value generated one after another in the speed planning part 43 in the condition where the host vehicle V travels on a travel path is explained.

Fig 6 is a flowchart of the speed planning part 43 of First Embodiment.

First, at Step S1, the information acquisition part 43a of the speed planning part 43 acquires travel condition information from the information acquisition part 41, and acquires the path command value P from the path planning part 42.

Next, at Step S2, based on the travel condition information and the path command value P acquired at Step S1, the path feature point setting part 43b of the speed planning part 43 sets path feature points such as a peak point of the curvature on the path command value P (hereinafter called a "first path feature point") and a peak point of a distance derivative value of the curvature (hereinafter called a "second path feature point").

At Step S31, based on the travel condition information and the path command value P acquired at Step S1 and on the path feature point set at Step S2, the path speed generation part 43c of the speed planning part 43 generates the speed command value P to make a longitudinal acceleration generated when traveling with the path command value P fall within the specified value.

Fig. 7A is one example for graphs of a distance axis for a curvature (a) of the path command value P of Fig. 4, a vehicle speed (b) generated when the host vehicle V travels at a constant speed (broken line) and when the host vehicle travels at the speed command value generated at Step S31 (solid line), a longitudinal acceleration (c), a lateral acceleration (d), a longitudinal jerk (e), and a lateral jerk (f) and a diagram (g) of a longitudinal acceleration and a lateral acceleration. The solid lines of Fig. 7A (when the speed command value at Step S31 is used) describe that, to consider a cooperation between the longitudinal movement and lateral movement and to make each physical amount related to the vehicle behavior fall within the specified value illustrated by the dash-dot line, the zero point of the longitudinal acceleration (c) is aligned to the peak point (first path feature point) of the curvature (a), and further, the peak point of the longitudinal acceleration (c) is aligned to the peak point of the distance derivative value of the curvature (a) (the second path feature point) to maximize the longitudinal acceleration (c) within the specified value.

Note that, as seen in the comparison between the broken lines and solid lines in (d) and (g) in Fig. 7A, Fig. 7A illustrates that ride quality and comfort for passengers are improved a little by use of the speed command value at Step S31 in comparison to travel at a constant speed, but the lateral acceleration (d) still exceeds the specified value, and thus the speed command value needs to be further improved.

At Step S32, based on the speed command value generated at Step S31, the travel speed generation part 43c of the speed planning part 43 determines whether the physical quantity related to the vehicle behavior generated when traveling with the path command value P is within the specified value. Then, when the physical quantity related to the vehicle behavior is within the specified value (YES at Step S32), the flow proceeds to Step S4, and when the physical quantity related to the vehicle behavior is over the specified value (NO at Step S32), the flow proceeds to Step S33.

At Step S33, based on the travel condition information and path command value P acquired at Step S1, the path feature point defined at Step S2, and the speed command value generated at Step S31, the travel speed generation part 43c of the speed planning part 43 generates the speed command value with which both the longitudinal acceleration and the longitudinal jerk generated when traveling with the path command value P become within the specified value.

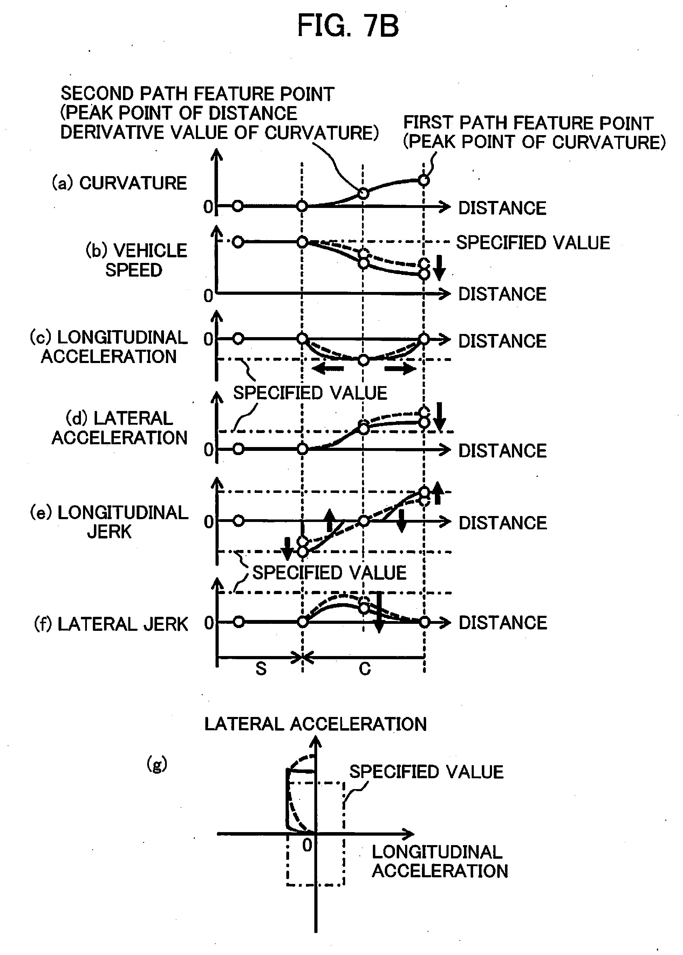

Fig. 7B is one example for the curvature (a) of the path command value P of Fig. 4, the physical quantity when the host vehicle V travels with the speed command value generated at Step S31 (broken line), and the physical quantity related to a vehicle behavior generated when traveling with the speed command value generated at Step S33 (solid line), and the graph configuration is common to Fig. 7A. The solid line of Fig. 7B (when the speed command value at Step S33 is used) indicates that, to make the physical quantity related to the vehicle behavior fall within the specified value, after setting the peak point of the longitudinal acceleration (c) as the peak point of the distance derivative value of the curvature as well as at Step S31, the longitudinal jerk (e) is maximized.

Note that, as seen from the comparison of the broken lines and solid lines of (d) and (g) in Fig. 7B, Fig. 7B illustrates a condition where, in comparison with use of the speed command value at Step S31, ride quality and comfort for passengers are further improved using the speed command value at Step S33, but the lateral acceleration (d) is still over the specified value, and thus the speed command value needs to be further improved.

At Step S34, based on the speed command value generated at Step S33, the travel speed generation part 43c of the speed planning part 43 determines whether the physical quantity related to the vehicle behavior generated when traveling with the path command value P is within the specified value. Then, when the physical quantity related to the vehicle behavior is within the specified value (YES at Step S34), the flow proceeds to Step S4, and when the physical quantity related to the vehicle behavior is over the specified value (NO at Step S34), the flow proceeds to Step S35.

At Step S35, based on the travel condition information and the path command value P acquired at Step S1, the path feature point set at Step S2, and the speed command value generated at Step S33, the travel speed generation part 43c of the speed planning part 43 moves the deceleration starting point closer (direction approaching the host vehicle V) in deceleration, and moves the acceleration end point farther (direction away from the host vehicle V) in acceleration to generate the speed command value with which the physical quantity related to the vehicle behavior falls within the specified value.

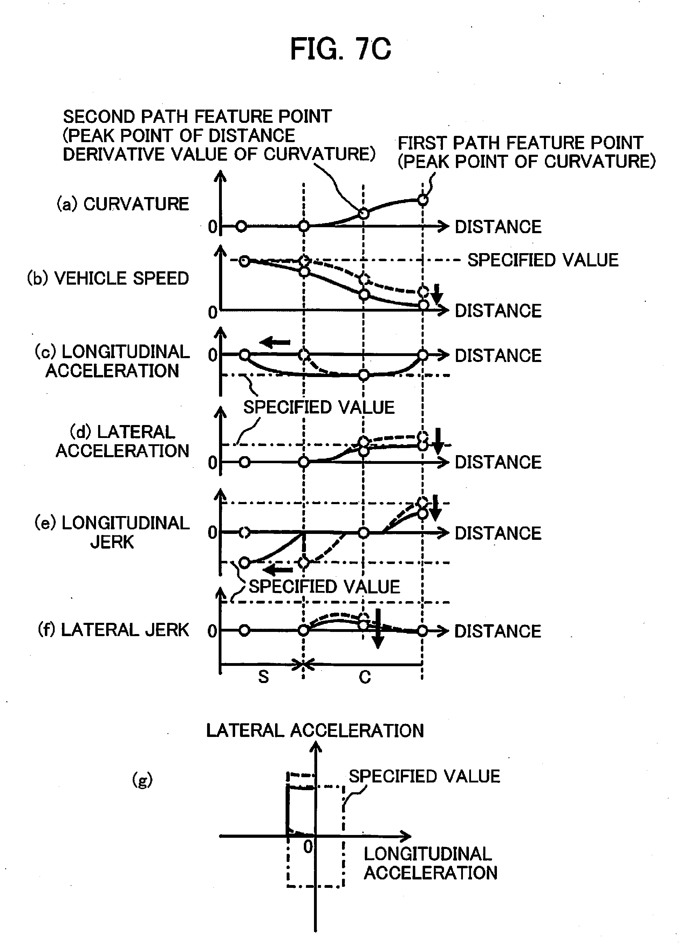

Fig. 7C is one example for the curvature (a) of the path command value P of Fig. 4 and the physical quantities related to the vehicle behaviors generated when the host vehicle V travels with the speed command value generated at Step S33 (broken line) and when traveling with the speed command value generated at Step S35 (solid line), and the configuration of the graph is common to Fig. 7A and Fig. 7B. On the solid line of Fig. 7C (by use of the speed command value at Step S35), to make the physical quantity related to the vehicle behavior fall within the specified value, the peak point of the longitudinal acceleration (c) is set as the peak point of the distance derivative value of the curvature as well as at Step S31 or Step S33. After maximizing the longitudinal jerk (e) within the specified value, the deceleration starting point is set on the straight path S before the connection point between the straight path S and the curve C (see the graph of the longitudinal acceleration (c)).

Note that, as seen from the comparison of the broken lines and the solid lines of (d) and (g) in Fig. 7C, Fig. 7C illustrates a condition where, in addition to the longitudinal acceleration (c), the lateral acceleration (d) also falls within the specified value by use of the speed command value at Step S35, and ride quality and comfort for passengers are secured enough.

At Step S4, the information output part 43d of the speed planning part 43 outputs the speed command value generated at any of Step S31, Step S33, and Step S35 to the information output part 44 of the travel trajectory generation unit 4. Note that, by use of any of the speed command values outputted at Step S4, the physical quantity related to the vehicle behavior can fall within the specified value, and thus the travel control unit 5 that receives the speed command values from the information output part 44 controls the powertrain system 6, the brake system 7, and the steering system 8 to realize vehicle control with high ride quality.

### <Another Example of processing of Speed Planning Part 43>

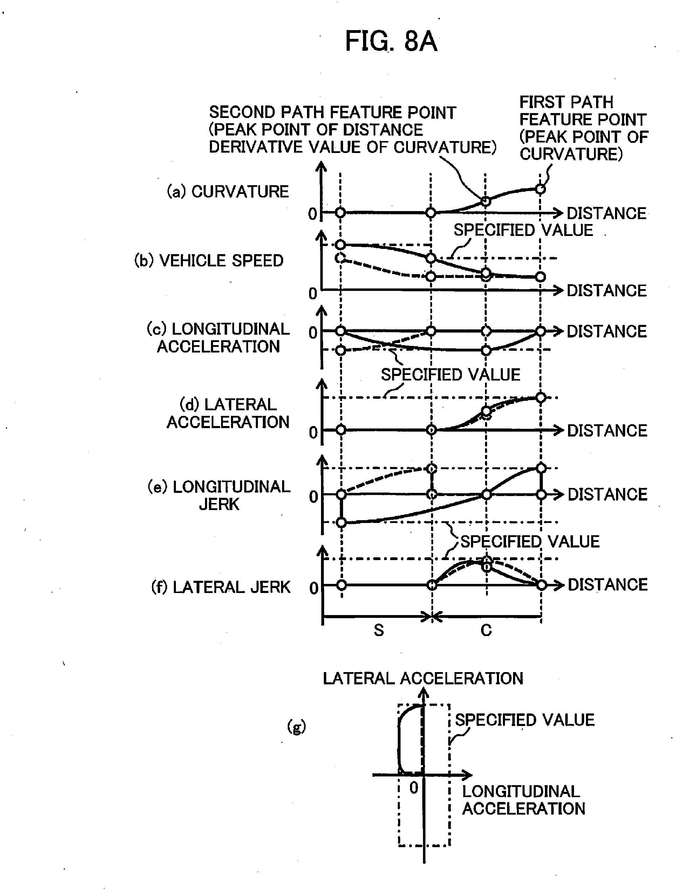

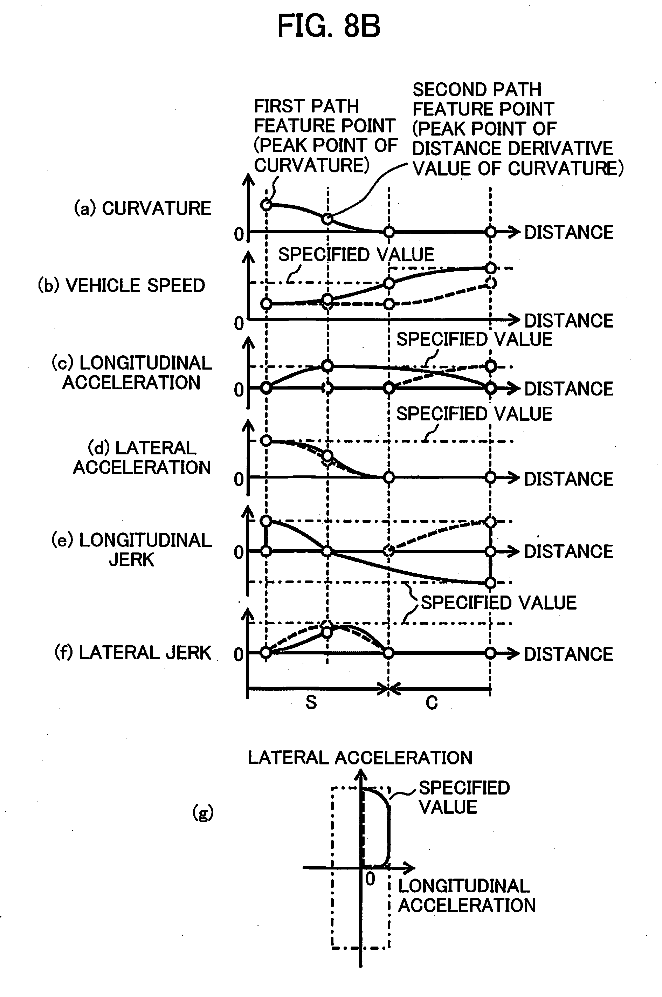

Next, another example of processing of the speed planning part 43 is explained using Fig. 8A and Fig. 8B. Fig. 8A and Fig. 8B is another example for the curvature (a) of the path command value P in Fig. 4 and the physical quantity related to the vehicle behavior generated when the host vehicle V travels with the speed command value generated through the flowchart illustrated in Fig. 6, and the graph configuration is common to Fig. 7A and the like.

The specified value of the vehicle speed (b) is constant in Fig. 7A to Fig. 7C. In Fig. 8A and Fig. 8B, the specified value of the vehicle speed (b) when traveling on the curve C. is made smaller than that when traveling on the straight path S. In this case, even in any of the conditions of Fig. 8A (entering the curve C) and Fig. 8B (leaving the curve C), the processing to Step S35 in Fig. 6 is performed to make the physical quantity related to the vehicle behavior including the vehicle speed (b) fall within the specified value while further suppressing the speed when traveling on the curve C.

Thereby, the acceleration and jerk can fall within the specified value while traveling on the curve C with the vehicle speed providing high ride quality.

In this way, in the speed control of the present embodiment illustrated in Fig. 7A to Fig. 8B, to coordinate the longitudinal movement and lateral movement, the peak point of the longitudinal acceleration is aligned to the peak point of the distance derivative value of the curvature, and the zero point of the longitudinal acceleration is aligned to the peak point of the curvature. Then, by gradually extending the range in which the longitudinal acceleration generates until the physical quantity related to the vehicle behavior falls within the specified value, the physical quantity related to the vehicle behavior can fall within the specified value which does not spoil ride quality and comfort for passengers while minimizing a speed decrease.

### Second Embodiment

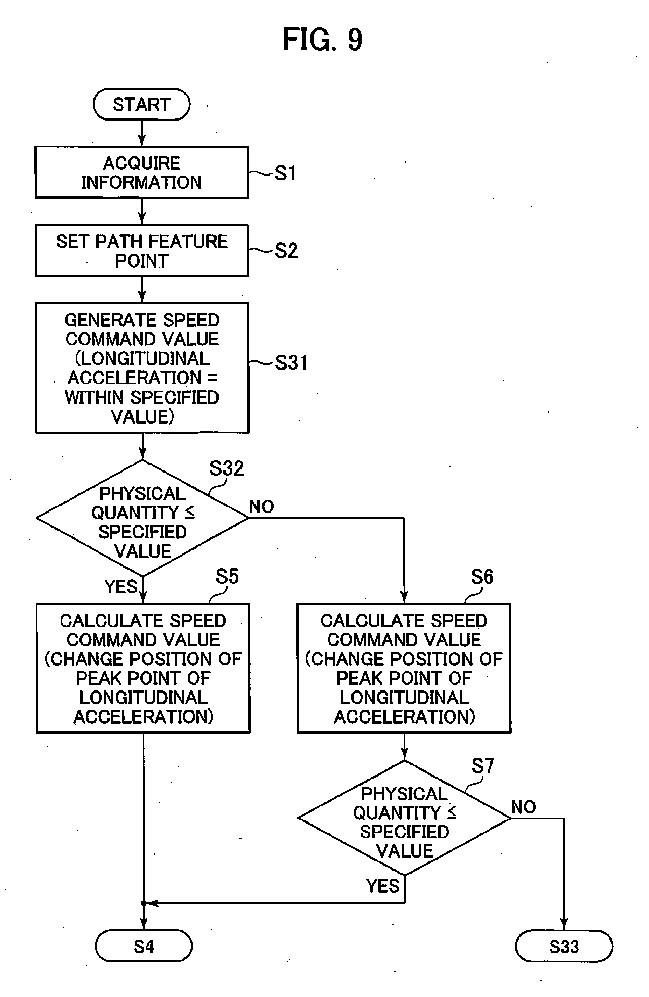

Next, the vehicle movement control device 2 of Second Embodiment of the present invention is explained using Fig. 9 to Fig. 10B. Note that the common points to those of the First Embodiment are not explained repeatedly.

Fig 9 is a flowchart of the speed planning part 43 of Second Embodiment. In the flowchart of the speed planning part 43 of the present embodiment illustrated herein, Step S5 to Step S7 are added between Step S32 and Steps S4, S33 in the flowchart of the speed planning part 43 of First Embodiment illustrated in Fig. 6. That is, in the present embodiment, when the physical quantity by the speed command value of Step S31 is determined to be within the specified value at Step S32, the flow proceeds to Step S5, and otherwise proceeds to Step S6.

At Step S5, the travel speed generation part 43c of the speed planning part 43 moves the position of the peak point of the longitudinal acceleration closer or farther on the distance axis, and then generates the speed command value. The ride quality at a certain level or more is guaranteed in the vehicle control using the speed command value at Step S31 according to the determination at Step S32. At this step, the longitudinal jerk of the speed command value at Step S31 is modified to be smaller. As a result, the vehicle control that further suppresses instability behavior of the vehicle with a higher ride quality becomes achievable.

On the other hand, at Step S6, to improve a larger physical quantity related to the vehicle behavior than the specified value (approaching the specified value), the travel speed generation part 43c of the speed planning part 43 generates the speed command value after moving the position of the peak point of the longitudinal acceleration closer or farther on the distance axis. Since the vehicle control providing a sufficiently high ride quality is determined to be unrealizable with the speed command value at Step S31 according to the determination at Step S32, the longitudinal jerk of the speed command value generated at Step S31 is modified to be smaller to increase the possibility that vehicle control providing a high ride quality is realizable through the processing of the present step. Note that, since the physical quantity ab related to out the vehicle behavior may not fall within the specified value even through the processing of this step, processing for further improving the speed command value (for example, Steps S33, S35 in Fig. 6) may be required.

Therefore, at Step S7, based on the speed command value of Step S6, the travel speed generation part 43c of the speed planning part 43 determines whether the physical quantity related to the vehicle behavior generated when traveling with the path command value P is within the specified value. Then, when the physical quantity related to the vehicle behavior is within the specified value (YES at Step S7), the flow proceeds to Step S4, and when the physical quantity related to the vehicle behavior is over the specified value (NO at Step S7), the flow proceeds to Step S33. Thereby, the speed command value of Step S6 can be further modified if needed.

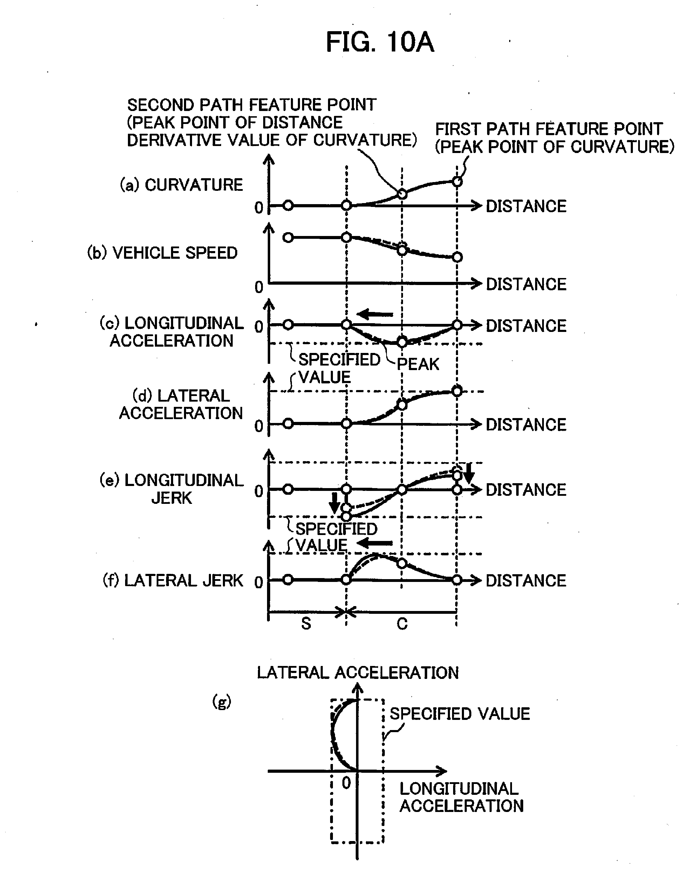

Fig. 10A is one example for the curvature (a) of the path command value P in Fig. 4 and the physical quantities related to the vehicle behaviors generated when the host vehicle V travels with the speed command value generated at Step S31 of First Embodiment (broken line) and when traveling with the speed command value generated at Step S5 of Second Embodiment (solid line). The configuration of the graph is common to, e.g., that in Fig. 7A of First Embodiment. On the solid line of Fig. 10A, the peak point of the longitudinal acceleration (c) is made closer (in the direction approaching the host vehicle V) in the range in which the physical quantity related to the vehicle behavior falls within the specified value. Thus, the jerk in the region with the large acceleration becomes small.

In this way, in the speed control of the present embodiment illustrated in Fig. 10A, the peak point of the longitudinal acceleration is made closer or farther in the range in which the physical quantity related to the vehicle behavior falls within the specified value to reduce the jerk in the region with the large acceleration. Thus, unstable behavior of the vehicle is suppressed and ride quality for passengers is improved.

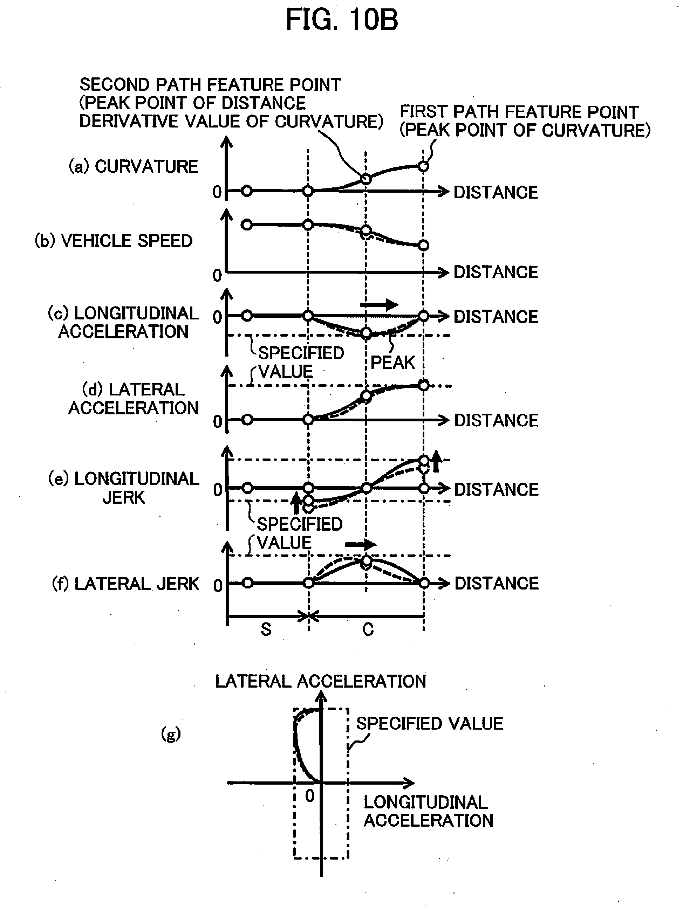

On the other hand, Fig. 10B is one example for the curvature (a) of the path command value P in Fig. 4 and the physical quantities related to the vehicle behaviors generated when the host vehicle V travels with the speed command value generated at Step S31 of First Embodiment (broken line) and when traveling with the speed command value generated at Step S6 of Second Embodiment (solid line). The configuration of the graph is common to, e.g., that in Fig..7A of First Embodiment. On the solid line of Fig. 10B, the peak point of the longitudinal acceleration is made farther (in the direction away from the host vehicle V) to make the physical quantity related to the vehicle behavior fall within the specified value.

Thus, in the speed control of the present embodiment illustrated in Fig. 10B, the peak point of the longitudinal acceleration is made closer or farther to make the physical quantity related to the vehicle behavior fall within the specified value. The physical quantity related to the vehicle behavior can fall within the specified value while the longitudinal movement and lateral movement are coordinated, improving ride quality for passengers.

### Third Embodiment

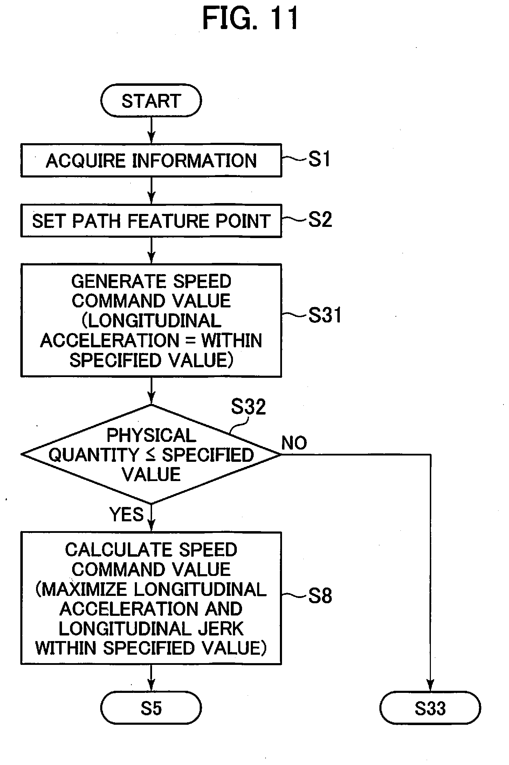

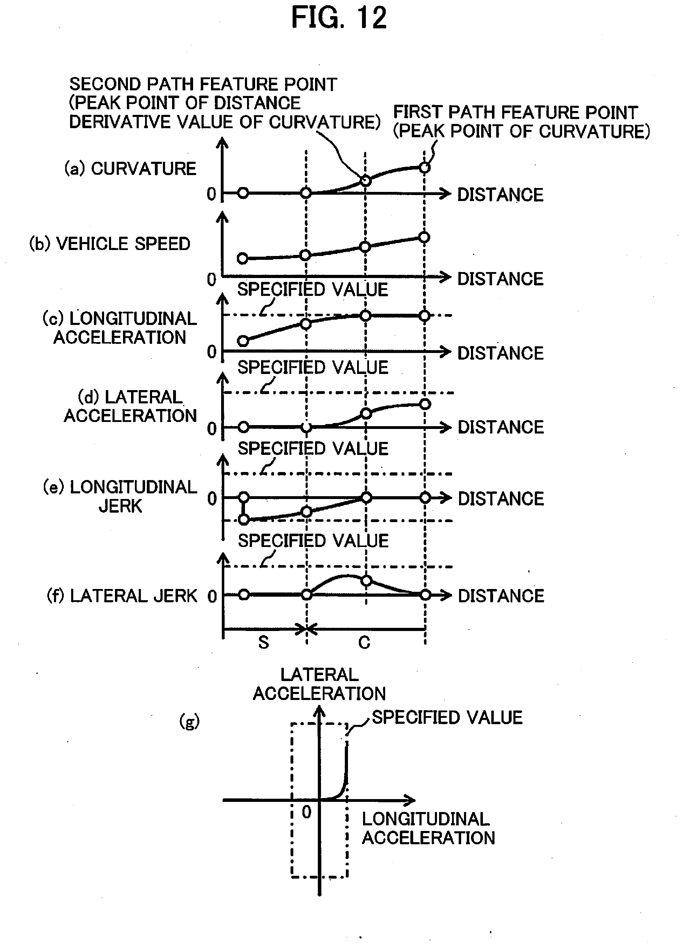

Next, the vehicle movement control device 2 of Third Embodiment of the present invention is explained using Figs. 11 and 12.

Note that the common points to First or Second Embodiment are not explained repeatedly.

Fig 11 is a flowchart of the speed planning part 43 of Third Embodiment. In the flowchart of the speed planning part 43 of the present embodiment illustrated herein, Step S8 is added between Step S32 and Step S5 of the flowchart of the speed planning part 43 in Second Embodiment illustrated in Fig. 9.

At Step S8, the travel speed generation part 43c of the speed planning part 43 generates the speed command value with which the longitudinal acceleration of the peak point of the curvature does not become zero when the physical quantity related to the vehicle behavior generated in the host vehicle V that has traveled based on the speed command value of Step S31 is within the specified value.

Fig. 12 is one example for the curvature (a) of the path command value P in Fig. 4 and the physical quantity related to the vehicle behavior generated when the host vehicle V travels with the speed command value generated at Step S8. The configuration of the graph is common to, e.g., that in Fig. 7A of First Embodiment. In Fig. 12, the longitudinal acceleration (c) and the longitudinal jerk (e) are maximized in the range in which the physical quantity related to the vehicle behavior falls within the specified value.

In this way, in the speed control of the present embodiment illustrated in Fig. 12, by maximizing the longitudinal acceleration and the longitudinal jerk in the range in which the physical quantity related to the vehicle behavior falls within the specified value, generation of vibration and a decrease in vehicle speed due to unnecessary acceleration and deceleration can be suppressed. Thus, ride quality for passengers is improved and travel time can be shortened.

### Fourth Embodiment

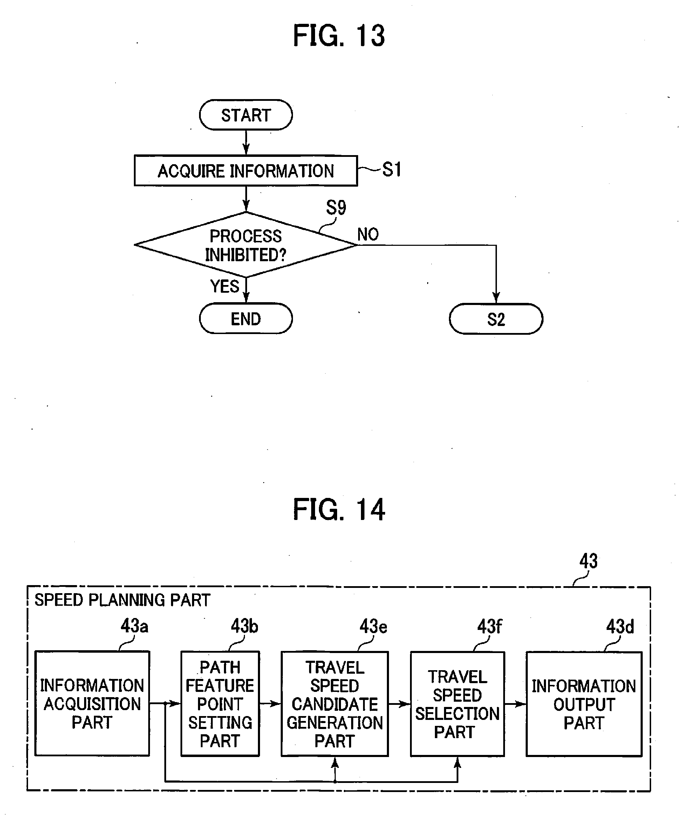

Next, the vehicle movement control device 2 of Fourth Embodiment of the present invention is explained using Fig. 13. Note that the common points to those in First Embodiment to Third Embodiment are not explained repeatedly.

Fig 13 is a flowchart of the speed planning part 43 of Fourth Embodiment. In the flowchart of the present embodiment illustrated herein, Step S9 is added between Step S1 and Step S2 of the flowchart of First Embodiment illustrated in Fig. 6, the flowchart of Second Embodiment illustrated in Fig. 9, and the flowchart of Third Embodiment illustrated in Fig. 11.

At Step S9, based on a flag generated at a higher controller (for example, the operation management unit 3) than the speed planning part 43, the speed planning part 43 determines whether to generate the speed command value. Then, when the flag indicates inhibition of processing (YES at Step S9), the processing is ended, and the speed command value is not generated. On the other hand, when the flag indicates permission of processing (NO at Step S9), the flow proceeds to the processing at or after Step S2, where a desired speed command value is generated.

Thereby, for example, on an emergency etc. to avoid a leading vehicle that has stopped suddenly, when the generation processing of the speed command value that improves ride quality is inhibited by the higher controller, transition to the speed control of the higher controller that focuses on the avoidance performance is made. Thus, collision with the leading vehicle can be avoided while causing low ride quality, improving safety.

### Fifth Embodiment

Next, the vehicle movement control device 2 of Fifth Embodiment of the present invention is explained using Fig. 14. Note that the common points to those in First Embodiment to Fourth Embodiment are not explained repeatedly.

Fig. 14 is a functional block diagram of the speed planning part 43 of Fifth Embodiment. In the speed planning part 43 of the present embodiment illustrated herein, the travel speed generation part 43c of the speed planning part 43 of First Embodiment illustrated in Fig. 3 is changed to a travel speed candidate generation part 43e, and further, a travel speed selection part 43f is added.

Based on the travel condition information and the path command value P acquired by the information acquisition part 43a, the travel speed candidate generation part 43e generates multiple speed command values with which the physical quantity related to the vehicle behavior generated when traveling with the path command value P falls within the specified value, and outputs the generated values to the travel speed selection part 43f.

Based on a current travel mode (a shortest time mode, an economy mode, etc.) indicated in the travel condition information from the information acquisition part 43a and multiple speed command value candidates from the travel speed candidate generation part 43e, the travel speed selection part 43f selects one of the candidates as a speed command value, and the information output part 43d outputs the selected candidate to the travel control unit 5.

For example, when the travel condition information indicates the shortest time mode, the speed command value candidate with the shortest travel time is selected from the multiple speed command value candidates generated by the travel speed candidate generation part 43e, and when the travel condition information indicates the economy mode, the speed command value candidate with minimum energy consumption is selected from the multiple speed command value candidates. That is, in the travel speed selection part 43f, the speed command value with the shortest travel time is selected from the multiple speed command value candidates, and the speed command value with the minimum energy consumption is selected from the multiple speed command value candidates.

Additionally, to make possible generation of multiple speed command values in the travel speed candidate generation part 43e, the specified value setting part 31 of the operation management unit 3 of present embodiment may set multiple specified values based on a mass, size, and arrangement of passengers and cargos on the vehicle and on a condition of a path on which the vehicle travels. Thereby, in the travel speed candidate generation part 43e, the multiple speed command values are generable according to, e.g., the number of and seating positions of passengers. The travel speed selection part 43f selects the speed command value according to, e.g., the number of passengers to enable further improvement of ride quality during travel of the vehicle.

Thus, according to the vehicle movement control device of Fifth Embodiment, in addition to acquisition of the same effect as First Embodiment to Fourth Embodiment, vehicle movement is controllable in response to selection of the travel mode and the mount condition of the vehicle.

Note that the present invention is not limited to the above embodiments, but includes various modifications.

For example, the above embodiments are explained specifically for clear understanding of the present invention, which is not limited to the embodiments having all the explained configurations. Additionally, part of a configuration of a certain embodiment is replaceable with part of a configuration of another embodiment. Additionally, a configuration of a certain embodiment can add thereto a configuration of another embodiment. Additionally, part of a configuration of each embodiment is removable, can add thereto part of the other configurations, and is replaceable with part of the other configurations.

### List of Reference Signs

1: vehicle-mounted system, 11: external communication device, 12: GNSS, 13: map information storage part, 14: sensor, 15: HMI unit, 2: vehicle movement control device, 3: operation management unit, 31: specified value setting part, 4: travel trajectory generation unit, 41: information acquisition part, 42: path planning part, 43: speed planning part, 43a: information acquisition part, 43b: path feature point setting part, 43c: travel speed generation part, 43d: information output part, 43e: travel speed candidate generation part, 43f: travel speed selection part, 44: information output part, 5: travel control unit, 6: powertrain system, 7: brake system, 8: steering system

## Claims

1. A vehicle movement control device comprising:
a path planning part that generates a path on which a vehicle travels;
a specified value setting part that sets a specified value of a physical quantity of a vehicle behavior when traveling on the path;
a path feature point setting part that sets a path feature point based on the path and the specified value; and
a travel speed generation part that generates a speed command value for the vehicle to travel on the path based on the path, the specified value, and the path feature point,
wherein the travel speed generation part sets a zero point of a longitudinal acceleration based on a path feature point that is a peak point of a curvature of the path, and sets a peak point of a longitudinal acceleration based on a path feature point that is a peak point of a distance derivative value of the curvature.

2. The vehicle movement control device according to claim 1 wherein
the travel speed generation part aligns a zero point of a longitudinal acceleration to a peak point of the curvature and aligns a peak point of a longitudinal acceleration to a peak point of a distance derivative value of the curvature to generate the speed command value.

3. The vehicle movement control device according to claim 2 wherein
the travel speed generation part generates a speed command value with which a longitudinal acceleration and a longitudinal jerk are maximized within a specified value between the feature points of the path, and
when a lateral acceleration and a lateral jerk become outside a specified value with the speed command value, generates a speed command value by moving a deceleration starting point closer or moving an acceleration end point farther on a distance axis.

4. The vehicle movement control device according to claim 2 wherein
the travel speed generation part generates a speed command value with which a longitudinal acceleration and a longitudinal jerk are maximized within a specified value between the feature points of the path, and
in a range in which a lateral acceleration and a lateral jerk fall within a specified value by use of the speed command value, generates a speed command value by moving a position of a peak point of a longitudinal acceleration closer or farther on a distance axis.

5. The vehicle movement control device according to claim 1 wherein
the travel speed generation part generates a speed command value with which a longitudinal acceleration, and a longitudinal jerk are maximized within a specified value between the feature points of the path, and
when a lateral acceleration and a lateral jerk fall within a specified value by use of the speed command value, a zero point of the longitudinal acceleration is not aligned to a peak point of the curvature.

6. The vehicle movement control device according to claim 2 wherein
the travel speed generation part
generates the speed command value when a flag outputted from a higher controller indicates permission of processing, and
does not generate the speed command value when a flag outputted from a higher controller indicates inhibition of processing.

7. The vehicle movement control device according any one of claims 1 to 6 wherein
the path feature point setting part
sets a peak of a curvature of the path or an inflection point of a curvature greater than zero as a curvature peak point, and
sets a middle point between an inflection point where a distance derivative value of the curvature or a curvature changes from zero or a curvature changes to zero and the curvature peak point as a peak point of a distance derivative value of a curvature.

8. The vehicle movement control device according any one of claims 1 to 6 wherein
based on a mass, sizes, and an arrangement of passengers and cargos on a vehicle and on a condition of a path on which a vehicle travels, the specified value setting part sets a specified value.

9. A vehicle movement control method comprising:
a path planning step of generating a path on which a vehicle travels;
a specified value setting step of setting a specified value of a physical quantity of a vehicle behavior when traveling on the path;
a path feature point setting step of setting a path feature point based on the path and the specified value; and
a travel speed generation step of generating a speed command value for the vehicle to travel on the path based on the path, the specified value, and the path feature point,
wherein, at the travel speed generation step,
a zero point of a longitudinal acceleration is set based on a path feature point that is a peak point of a curvature of the path, and a peak point of a longitudinal acceleration is set based on a path feature point that is a peak point of a distance derivative value of the curvature.
